**Europäisches Patentamt**

**European Patent Office**

**Office européen des brevets**

(19)

(11) Veröffentlichungsnummer : **0 130 269**
**B1**

## EUROPÄISCHE PATENTSCHRIFT

(12)

(45) Veröffentlichungstag der Patentschrift :
25.05.88

(51) Int. Cl.⁴ : **G 06 F   9/38**

(21) Anmeldenummer : **84100401.3**

(22) Anmeldetag : **16.01.84**

(54) Speicherprogrammierbare Steuerung.

(30) Priorität : 01.07.83 DE 3323824

(43) Veröffentlichungstag der Anmeldung :
09.01.85 Patentblatt 85/02

(45) Bekanntmachung des Hinweises auf die Patenterteilung : 25.05.88 Patentblatt 88/21

(84) Benannte Vertragsstaaten :
**AT BE CH DE FR GB IT LI SE**

(56) Entgegenhaltungen :
**DE-A- 2 817 536**
**DE-A- 3 101 270**
**US-A- 4 107 773**

(73) Patentinhaber : **Siemens Aktiengesellschaft Berlin
und München
Wittelsbacherplatz 2
D-8000 München 2 (DE)**

(72) Erfinder : **Wollscheid, Dieter, Dipl.-Ing.
Oppelner Strasse 21
D-8520 Erlangen (DE)**

EP 0 130 269 B1

## Beschreibung

Die Erfindung bezieht sich auf eine speicherprogrammierbare Steuerung mit zyklisch durchlaufenem Anwenderprogramm, bestehend zumindest aus :

a) einem Wortprozessor mit Wortprozessorbus zur Bearbeitung von Betriebssystem- und Wortbefehlen,

b) einem Bitprozessor zur Bearbeitung binärer Verknüpfungsbefehle, und

c) Anwenderprogrammspeicher, Betriebssystemspeicher und Datenspeicher mit binärem Prozeßabbild.

Speicherprogrammierbare Steuerungen sind beispielsweise in der Siemens-Zeitschrift « Energietechnik », 1979, Heft 2, Seiten 43 bis 47 oder in Heft 4, Seiten 136 bis 139, oder in der Europäischen Patentschrift 10170 und in den US-Patentschriften 39 21 146 und 39 42 158 näher beschrieben.

Eine komfortable speicherprogrammierbare Steuerung der eingangs genannten Art soll sowohl logische Verknüpfung von 1 bit-breiten Daten durchführen als auch komplexe Funktionen mit wortbreiten Daten, wie z. B. Arithmetikfunktionen, Datentransfer, Zeitenbildung usw., ausführen können.

Es ist daher vorteilhaft, im Rahmen einer speicherprogrammierbaren Steuerung ein Mehrprozessorsystem zu verwenden, bei dem die Ausführung der Binärbefehle einem gesonderten Bitprozessor übertragen wird, wogegen ein relativ langsamer Standardwortprozessor die komplexen Funktionen ausführen kann (vgl. z. B. Siemenszeitschrift « Energietechnik » 1980, Heft 9, Seite 361).

Wesentliches Kriterium für die Leistungsfähigkeit einer speicherprogrammierbaren Steuerung ist der Befehlsdurchsatz und hier insbesondere der des Bitprozessors.

Die Aufgabe der vorliegenden Erfindung besteht darin, einen schnellen Bitprozessor zu schaffen.

Diese Aufgabe wird erfindungsgemäß durch das folgende Merkmal gelöst :

d) daß der Bitprozessor beim Abarbeiten eines vorliegenden binären Verknüpfungsbefehls im Befehlsausführungsteil, der auf den Datenspeicher über einen gesonderten Bus Zugriff hat, gleichzeitig laufend die zum nächsten Befehl des Anwenderprogramms gehörenden Worte über einen gesonderten weiteren Bus vom Anwenderprogrammspeicher holt und den nächsten Befehl zusammenstellt, um ihn sofort nach Ausführung des vorhergehenden Befehls zur darauffolgenden Befehlsausführung bereitzustellen.

Um den Befehlsdurchsatz zu erhöhen, werden also das Laden des Befehls und die Ausführung des vorhergehenden Befehls parallel durchgeführt. Aufgrund der geringen Komplexität der Befehle, die der Bitprozessor durchführt und der damit verbundenen geringen Zeitaufwände für Befehlsdekodierungen und interner Befehlsausführung ist die Speicherzugriffszeit der bestimmende Faktor ; aus diesem Grund sind Anwenderprogrammspeicher und Datenspeicher des Bitprozessors über getrennte Bussysteme angekoppelt.

Erkennt der Bitprozessor bei der Befehlszusammenstellung einen Wortbefehl, so geht er in Wartestellung und liefert eine den Wortbefehl kennzeichnende Information für den Wortprozessor.

Da die Kommunikation des Steuerungssystems mit der Prozeßperipherie und der Programmier- und Testeinrichtung über den Wortprozessor läuft ; dieser also von außen eintreffende asynchrone Ereignisse zu verarbeiten hat, steuert der Wortprozessor den Bitprozessor, und zwar in der Weise wie ein programmierbarer Peripheriebaustein, welcher gestartet und gestoppt werden kann, dessen Befehlsadressenregister manipuliert werden kann usw. Da die Zugriffe auf Steuer- und Statuszellen des Bitprozessors vom Wortprozessor her auch dann durchführbar sein müssen, wenn der Bitprozessor Befehle lädt und ausführt, ist noch ein dritter Busanschluß, und zwar an den Wortprozessorbus, für den Bitprozessor erforderlich.

Anhand eines in der Zeichnung dargestellten Ausführungsbeispiels sei die Erfindung näher erläutert ; es zeigen :

Figur 1 ein Prinzipschaltbild der speicherprogrammierbaren Steuerung, und

Figur 2 Details des Bitprozessors.

Das Anwenderprogramm liegt in einem Anwenderprogrammspeicher 5, welcher als Schreib/Lesespeicher oder als nur Lesespeicher ausgebildet sein kann. Dieser Speicher kann z. B. $2^{16}$x 8 bit organisiert sein und über sechzehn Adressleitungen und acht Datenleitungen sowie Steuerleitungen angesprochen werden.

Die zu verarbeitenden Daten, d. h. das Prozeßabbild, befinden sich in einem als Schreib/Lesespeicher ausgebildeten Datenspeicher 6, welcher z. B. $2^9$ x 8 bit breit organisiert ist. Der Wortprozessor, im Regelfall ein Standardmikroprozessor, hat folgende Aufgaben :

- Abarbeitung von Sonderbefehlen im Anwenderprogramm, welche nicht im Operationsvorrat des Bitprozessors enthalten sind (Wortbefehle) ; hierzu gehören z. B. das Bearbeiten von Zähl- und Zeitzellen,

- Übertragung von Programmen aus dem Anwenderprogrammspeicher und von Daten aus dem Datenspeicher des Bitprozessors von und zu einer Programmier- und Testeinrichtung,

- Transfer von Daten aus dem Datenspeicher von und zu der Prozeßperipherie (Ein- und Ausgabe des Prozeßabbildes), und

- Diagnose und Servicefunktionen.

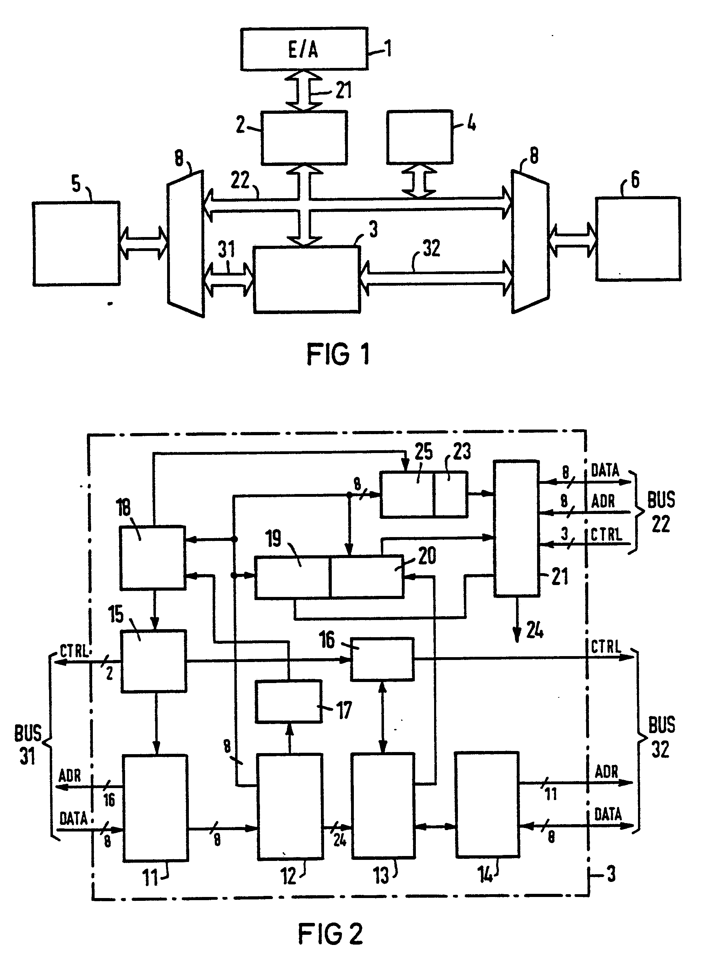

Wie aus Figur 1 ersichtlich, verfügt der Wortprozessor 2 über einen Peripheriebus 21, an dem die Ein- und Ausgabebaugruppen 1 von und zum Prozeß angeschlossen sind, ferner noch über einen internen Systembus 22 (Wortprozessorbus), an den der Betriebssystemspeicher 4 und über Datenweichen 8 Anwenderprogrammspeicher 5 und Datenspeicher 6 mit Prozeßabbild anschließbar sind. An den gleichen Bus 22 ist auch der Bitprozessor 3 anschließbar, der über eigene Busse 31 und 32 und über die Datenweichen 8 ausschließlich Zugriff auf Anwenderprogrammspeicher 5 und Datenspeicher 6 mit Prozeßabbild hat. Der Verkehr mit der Peripherie läuft immer über den Wortprozessor 2, der an den Zyklusgrenzen den Zustand aller Eingangsinformationen vom Prozeß her in den internen Datenspeicher 6 ablegt und die sich aus den Verknüpfungen ergebenden Ausgangssignale im Datenspeicher 6 am Zyklusende an die Prozeßperipherie überträgt. Während des Ablaufs des Programmes wird also nicht direkt mit den eigentlichen Signalen der Prozeßperipherie, sondern mit dem internen Prozeßabbild im Datenspeicher 6 gearbeitet. Die Instruktionen über Bit- oder Wortoperationen sind in einer speziellen Programmiersprache verschlüsselt und im Anwenderprogrammspeicher 5 niedergelegt. Diese Instruktionen werden vom Bitprozessor 3 direkt und vom Wortprozessor 2 in bestimmten Routinen abgearbeitet.

Diese Programmteile sowie sonstige Betriebssystemroutinen sind im Betriebssystemspeicher 4 des Wortprozessors 2 in der Sprache des verwendeten Mikroprozessors fest niedergelegt.

Wesentliches Kriterium für die Leistungsfähigkeit des vorstehend beschriebenen Systems ist der Befehlsdurchsatz. Es ist daher die schnelle Kopplung der beiden Prozessoren sowie auch ein schneller Befehlsdurchsatz im Bitprozessor äußerst wichtig.

Wie bereits bemerkt, werden im Regelfall die Befehle im Anwenderprogrammspeicher vom Bitprozessor selbst ausgeführt. Ein Teil der Befehle muß jedoch an den Wortprozessor weitergereicht werden.

Ein binärer Verknüpfungsbefehl besteht aus z. B. drei Worten zu 8 bit.

Der Bitprozessor 3 verfügt über ein Befehlsadreßregister, welches auf ein Wort im Anwenderspeicher zeigt. Zur Ausführung eines Befehls werden drei aufeinanderfolgende Worte in den Bitprozessor geladen. Befindet sich ein kompletter Befehl im Bitprozessor, so wird er entweder direkt ausgeführt, wobei auf den Datenspeicher 6 zugegriffen wird, oder der Befehl wird an den Wortprozessor 2 weitergereicht.

Die hierfür erforderliche Struktur des Bitprozessors zeigt Figur 2. Wie hieraus ersichtlich, wird die interne Abarbeitung der Befehle mittels mehrerer Segmente durchgeführt, die parallel arbeiten.

Das Befehlsholsegment 11 mit dem Befehlsadreßregister lädt entsprechend den Steuerbefehlen der Befehlsholsteuerung 15 kontinuierlich Speicherworte vom Anwenderprogrammspeicher 5 über die Datenweiche 8 in das Befehlsspeicher- und -montagesegment 12 des Bitprozessors 3. Während das Segment 11 Befehle lädt, wird im Befehlsausführungssegment 13 der vorherige Befehl unabhängig vom Laden des neuen Befehls unter Zugriff auf den Datenspeicher 6 über den Bus 32 ausgeführt.

Die beiden getrennten Busse 31 und 32 ermöglichen also die Unabhängigkeit von Befehlsholung und Befehlsausführung.

Wie bereits bemerkt, montiert das Segment 12 aus mehreren Speicherworten ein Befehlswort zusammen. Ist ein solcher Befehl zusammengestellt, wird er sofort an das Befehlsausführungssegment 13 weitergereicht. Gleichzeitig wird die Ablaufsteuerung 16 des Befehlsausführungssegmentes 13 angestoßen. Das Befehlsausführungssegment 13 bearbeitet nun den Befehl, wobei es über das Datenaufbereitungssegment 14 auf die Daten im Datenspeicher 6 zugreift. Die Daten sind im Datenspeicher in Worten zu 8 bits gespeichert. Die Breite entspricht dabei im Regelfall der Datenbusbreite des Wortprozessors. Sie ist möglichst groß zu wählen, um den Transfer von Daten von und zu der Prozeßperipherie ausreichend schnell zu machen, da hierbei ein relativ langsamer Übertragungskanal verwendet wird. Da jedoch die Daten vom Bitprozessor bitweise hantiert werden, muß für jeden Schreibvorgang eines einzelnen bits zunächst ein Wort aus dem Datenspeicher 6 gelesen, im Bitprozessor geändert und anschließend wieder in den Datenspeicher 6 geschrieben werden. Diese Aufgabe wird vom Datenaufbereitungssegment 14 vorgenommen, welches auch für die Indizierung von Befehlen, d. h. eine mögliche Substitution der Datenspeicheradresse, zuständig ist.

Erkennt der dem Befehlsmontagesegment 12 zugeordnete Vordekodierer 17, daß es sich nicht um einen binären Verknüpfungsbefehl, sondern um einen Wortbefehl handelt, so wird über die Startstoppsteuerung 18 der Bitprozessor stillgesetzt. Der Wortbefehl wird nicht direkt an den Wortprozessor weitergegeben, sondern dient als Einsprungadresse für den einer bestimmten Wortprozessoroperation zugeordneten Programmteil im Betriebssystemspeicher. Hierzu ist eine vom Befehlsmontagesegment 12 entsprechend dem vorliegenden Wortbefehl angesteuerte Speichersteuerung 25 vorgesehen, die aus dem Code der Wortoperation die Adresse für eine bestimmte Speicherzelle des zugeordneten Speichers 23 bildet. Dieser gegebenenfalls auch außerhalb des Bitprozessors 3 liegende Speicher 23 wird vom Wortprozessor laufend abgefragt. Er findet dann unter der adressierten Speicherzelle des Speichers 23 die Einsprungadresse seines zur Ausführung des Wortbefehls erforderlichen Programmteils. Auf diese Weise wird erreicht, daß bei festem Befehlscode der Wortoperation die Einsprungadressen in die zugeordneten Programmteile variabel gehalten werden können.

Auf den Speicher 23 kann gegebenenfalls auch verzichtet werden. In diesem Fall wird dieser Teil durch einen Datenblock innerhalb des Programmspeichers ersetzt, in dem mittels eines Tabellensuchverfahrens die Einsprungadresse ermittelt wird. Im einfachsten Fall kann die Einsprungadresse sogar unmittelbar aus dem Ausgabedatum der Speichersteuerung 25 mit arithmetischen und logischen Verknüpfungen bestimmt werden.

Der über die Anpassung 21 mit dem Wortprozessorbus 22 verbundene Bitprozessor, der selbständig ein Programm bearbeitet, kann über den Wortprozessorbus her vom Wortprozessor wie ein Peripheriebaustein hantiert werden ; z. B. kann über einen Steuereingang 19 der interne Zustand des Wortprozessors gesteuert werden, z. B. Startstopp, und über einen Statuseingang 20 der interne Zustand des Bitporozessors abgefragt werden. Ferner sind auch noch einige interne Register des Bitprozessors, wie z. B. das Befehlsadreßregister und Binärregister, vom Wortprozessor her bearbeitbar. Diese über die Anpassung 21 laufenden Eingriffsmöglichkeiten sind durch den Pfeil 24 angedeutet.

**Patentansprüche**

1. Speicherprogrammierbare Steuerung mit zyklisch durchlaufenem Anwenderprogramm, bestehend zumindest aus :

a) einem Wortprozessor mit Wortprozessorbus zur Bearbeitung von Betriebssystem- und Wortbefehlen,

b) einem Bitprozessor zur Bearbeitung binärer Verknüpfungsbefehle,

c) Anwenderprogrammspeicher, Betriebssystemspeicher und Datenspeicher mit binärem Prozeßabbild, dadurch gekennzeichnet,

d) daß der Bitprozessor (3) beim Abarbeiten eines vorliegenden binären Verknüpfungsbefehls im Befehlsausführungsteil (13), der auf den Datenspeicher (6) über einen gesonderten Bus (32) Zugriff hat, gleichzeitig laufend die zum nächsten Befehl des Anwenderprogramms gehörenden Worte über einen gesonderten weiteren Bus (31) vom Anwenderprogrammspeicher (5) holt und den nächsten Befehl zusammenstellt, um ihn sofort nach Ausführung des vorhergehenden Befehls zur darauffolgenden Befehlsausführung bereitzustellen.

2. Speicherprogrammierbare Steuerung nach Anspruch 1, dadurch gekennzeichnet, daß ein bei der Befehlszusammenstellung erkannter Wortbefehl über eine Startstoppschaltung (18) den Bitprozessor (3) stillsetzt und eine den Wortbefehl kennzeichnende Information für den Wortprozessor (2) liefert.

3. Speicherprogrammierbare Steuerung nach Anspruch 2, dadurch gekennzeichnet, daß die Startstoppschaltung (18) vom Wortprozessor (2) steuerbar ist.

4. Speicherprogrammierbare Steuerung nach Anspruch 1, dadurch gekennzeichnet, daß die internen Register des Bitprozessors (3) vom Wortprozessor (2) über den Wortprozessorbus (22) schreib- und lesbar sind.

**Claims**

1. A store-programmable control unit with a cyclically executed user programme, comprising at least :

a) a word processor with word processor bus for the processing of operating system- and word commands,

b) a bit processor for the processing of binary logic-linking commands,

c) user programme store, operating system store and process bit map data store, characterised in that

d) simultaneously to the processing of an existing binary logic-linking command in the command execution component (13), which has access to the data store (6) via a separate bus (32), via another separate bus (31) the bit processor (3) continuously acquires from the user programme store (5) the words assigned to the next command of the user programme and assembles the next command which it makes available immediately following the execution of the preceding command for subsequent execution.

2. A store-programmable control unit as claimed in claim 1, characterised in that a word command, recognised during the command assembly, stops the bit processor (3) via a start-stop circuit (18) and supplies an item of information, characterising the word command, for the word processor (2).

3. A store-programmable control unit as claimed in claim 2, characterised in that the start-stop circuit (18) can be controlled by the word processor (2).

4. A store-programmable control unit as claimed in claim 1, characterised in that the internal registers of the bit processor (3) can be written into and read by the word processor (2) via the word processor bus (22).

**Revendications**

1. Commande à programme enregistré, comportant un programme utilisateur à passage cyclique, commande qui comprend au moins :

a) un processeur de mots à bus de processeur de mots pour le traitement d'instructions du système d'exploitation et d'instructions de mots,

b) un processeur de bits pour le traitement d'instructions binaires de chaînage, et

c) une mémoire de programme utilisateur, une mémoire du système d'exploitation et une mémoire de données avec représentation binaire du processus, caractérisée en ce que

d) le processeur de bits (3), lors du traitement d'une instruction de chaînage binaire appliquée dans la partie d'exécution d'instructions (13), laquelle a accès à la mémoire de données (6) par un bus (32) particulier, va charger en même temps, de façon continue, par un bus supplémentaire (31) particulier, les mots appartenant à l'instruction suivante du programme utilisateur, dans la mémoire de programme utilisateur (5), et compose l'instruction suivante afin de la mettre à disposition immédiatement après l'exécution de l'instruction précédente, en vue de l'exécution d'instruction consécutive.

2. Commande selon la revendication 1, caractérisée en ce que la détection d'une instruction de mot lors de la composition de l'instruction provoque, au moyen d'un circuit marche/arrêt (18), l'arrêt du processeur de bits (3) et la fourniture, pour le processeur de mots (2), d'une information caractérisant l'instruction de mot.

3. Commande selon la revendication 2, caractérisée en ce que le circuit marche/arrêt (18) peut être commandé par le processeur de mots (2).

4. Commande selon la revendication 1, caractérisée en ce que les registres internes du processeur de bits (3) peuvent être inscrits et lus par le processeur de mots (2) à travers le bus de processeur de mots (22).

FIG 1

FIG 2